# EUROPEAN PATENT APPLICATION

(11) **EP 4 484 931 A1**
(43) Date of publication of application: **01.01.2025**
(21) Application number: 23759363.7
(22) Date of filing: 21.02.2023
(51) Int. Cl.: G01N 21/63, C14C 9/00, A01N 59/16, C09K 11/85

(54) **ANTIMICROBIAL PROTECTION IN THE POST-TANNING PROCESS FOR LEATHER BY INCORPORATING A BIOCIDE COMPOSITION AND A LUMINESCENT ADDITIVE**

(30) Priority: 23.02.2022 ES 202230147
(71) Applicant: Ancor Tecnológica Canaria, S.L., 35017 Las Palmas de Gran Canaria (Las Palmas) (ES)
(72) Inventor: BELTRÁN AZNAR, Noelia, 35017 Las Palmas de Gran Canaria (Las Palmas) (ES)
(74) Representative: De la Fuente Fernandez, Dionisio
(86) International application number: PCT/ES2023/070096
(87) International publication number: WO 2023/161547

(57) **Abstract**

The present invention discloses an additional antimicrobial protection step applied to leather in the post-tanning process which incorporates a biocide composition and an additive that allows its presence to be identified by means of a luminescent effect, in addition to certifying its authenticity using encryption techniques of the luminescence, wherein the composition is added in the tanning process immediately after the addition of chromium or titanium salts in an amount between 0.1% and 5% of the weight of the material to be tanned and comprises between 3% and 5% of silver phosphate glass; between 1% and 3.5% of silicone; between 0.1% and 0.30% of aliphatic hydrocarbons; between 90% and 95% of water, and the luminescent additive is added in an amount between 0.1% and 5% of the weight of the material to be tanned and comprises between 20% and 40% of silica; alumina in a proportion between 10% and 30%; between 30% and 50% of calcium fluoride; between 0.5% and 3% of erbium(III) fluoride; between 5% and 15% of ytterbium(III) fluoride; a maximum of 5% of thulium(III) fluoride; and a maximum of 5% of europium(III) fluoride, with respect to the total weight of the luminescent additive.

## Description

### OBJECT OF THE INVENTION

The present invention discloses an additional step for antimicrobial protection applied to leather, in the post tanning process, which incorporates a biocide composition and an additive that allows the identification of its presence through a luminescent effect, such that it guarantees that the leather has been previously treated with said biocide product, in addition to certifying its authenticity using encryption techniques of the luminescence, giving reassurance to the user.

### BACKGROUND OF THE INVENTION

Initially, the treatment of raw leather includes a visual inspection to ensure that it meets the required quality requirements and thus prevent its deterioration. Waste water is generated during the leather reception step, coming from the draining of the moisture contained in the leather. Afterwards, the portions of the neck, tail and limbs are cut out. The leather is washed for its rehydration, as well as to remove blood residues, excreta and other contained dirt. For this wash, sodium hydroxide, sodium hypochlorite and detergents are used. For the development of this step of the process, water and chemical substances (sodium hydroxide, sodium hypochlorite and detergents) are used for washing the leather. Raw leather is cured, by salting or drying the same.

To disinfect the leather, the most common method is the use of salt in the following two forms: brine salting or brine curing. During this operation, large volumes of water are used, dragging along soil and organic matter, as well as blood and manure waste.

Brine curing is a faster and the most used method, leather is placed in large vats containing disinfectants (mercury bichloride and carbolic acid), bactericides (sodium sulphate and boric acid) and a salt solution close to saturation. It is stirred to improve contact between the leather and the solution, and after spending around 16 hours in the vat, the leather completely absorbs the salt. The development of this activity requires water, electric energy for the stirrer, salt and aggressive chemicals (disinfectants and bactericides) for leather and empty chemical containers, in addition, solid waste with a high moisture content is generated, coming from the leather, as well as water and chemicals (sodium hydroxide, sodium hypochlorite and detergents) for washing the leather.

After disinfecting the leather, the pickling step begins, which consists of the chemical preparation of the leather for the tanning process by using mainly formic acid and sulphuric acid solutions. These acids contribute protons which bond with the carboxylic group, allowing the diffusion of the tanning agent inside the leather. The use of chemicals and water is required in this step to prepare the solutions. After this step, the tanning step begins, which consists of treating the leather with chromium or titanium salts.

The previous method does not guarantee that the treated skin is protected against microbial pathogens that are present on the surface of the leather, since the biocide components applied, as well as the subsequent treatments, such as tanning and storage, are able, by means of the tanning reactions, to reduce the previously applied disinfectant effect. In addition, the disinfectant products used are aggressive with the environment, therefore, there is a need in the post-tanning process for a disinfection step associated with an appropriate biocide that is aimed at protecting the environment and that allows the protection of the leather for a longer time, blocking the transmission of diseases caused by microbial pathogens from person to person for a longer time. Furthermore, there is a need for a method that is easier, faster, less expensive and more reliable, to determine if a biocide has been applied to a piece of leather and, optionally, that this leather remains protected for a long time.

More environmentally appropriate disinfectant compositions have been incorporated into the technique, as can be seen from patent application WO2008/093353, it relates to the use of a proteolytic enzyme and a carbohydrolytic enzyme combined for soaking leather and/or hides that serves to clean the dirt adhered to raw leather and hides, such that it allows their disinfection. The soaking of leather and hides is currently achieved through the use of surfactants, amines and organic solvents. Also on many occasions, when raw hides are tanned to produce leather, biocide preparations are added to the tanning drum to prevent the deterioration of the leather during storage and transportation, however, the use of surfactants decreases the quality of the resulting product.

American patent US5089414 suggests the use of soaking enzymes, such as protease and/or lipase, reducing or even avoiding the use of surfactants or substituting organic solvents. Compared with traditional methods, enzymatic soaking processes generally improve the quality of the final leather, reduce the use of chemicals and replace chemicals that have a harmful effect on the environment.

It has been shown that treatment with enzymes does not reduce the presence of microorganisms in an effective manner, since in a very short time after application they are degraded, losing the bactericidal effect, in addition to the associated cost. The present invention discloses a method of antimicrobial protection of leather during the post-tanning process, where an additional step is incorporated into the process that incorporates a biocide product based on a controlled source of Ag⁺ ions which allows a longer protection than conventional biocides used in the pre-tanning steps. Furthermore, a luminescent additive is included in the additional step to ensure that the piece has been treated and is free of microbes, pathogens, viruses, etc.

### PREFERRED EMBODIMENT OF THE INVENTION

The present invention discloses a method for the antimicrobial protection of leather during the tanning process which includes a biocide composition and a luminescent additive that allows the identification thereof.

After the tanning step, the post-tanning step begins, which consists of fatliquoring with the aim of avoiding the cracking of the leather so that it is soft, strong and flexible. This process consists of impregnating the leather with emulsified oils, which are deposited in the fibres of the leather, attaching thereto and giving the desired finish. In fatliquoring, there is a distinction between simple fatliquoring, hand or tub fatliquoring. In this entire series of treatments, the amount of emulsified oil is increased and thereby the water tightness and quality of the leather. During the development of this step, emulsified fatliquoring oils (mineral and vegetable) are required. As a result of the activity there is a risk of potential oil spills.

The present invention modifies this post-tanning step by incorporating an additional step which incorporates a biocide composition for the disinfection and protection of already tanned leather, blocking the transmission of diseases caused by microbial pathogens for longer than with the conventional process, the composition comprises between 3% and 5% of silver phosphate glass; between 1% and 3.5% of silicone; between 0.1% and 0.30% of aliphatic hydrocarbons; between 90% and 95% of water. This composition is added in the tanning process in an amount between 0.1% and 5% of the weight of the material to be tanned. The biocide composition provides silver ions in sufficient amount so as to maintain the biocide effect of the Ag (+) ions throughout the useful life of the material after tanning.

The amount of said composition is estimated to be between 0.5% and 1.0%, always referring to the weight of the leather to be treated in the process, this will be sufficient for the composition to fulfil its antimicrobial function.

Furthermore, in the post-tanning process, a luminescent additive is incorporated which indicates that the leather has been previously treated with the biocide composition. The incorporation into the biocide composition of a luminescent additive formed by metal oxides (aluminosilicate glass containing rare earth ions by way of dopants) allows a coating of said composition to be detected and identified by means of infrared light that induces an easily detectable luminescence (green light). This luminous additive presents an encodable emitted light pattern that allows the compound to be unforgeably identified, certifying its authenticity, which distinguish the same with respect to other similar products on the market.

The luminescent additive that acts as a marker allowing the identification of the biocide composition is made up of between 20% and 40% silica in combination with alumina in a proportion between 10% and 30% and calcium fluoride between 30% and 50% by weight. Materials doped with luminescent "rare earth" ions are added to this mixture, such as between 0.5 and 3% of erbium(III) fluoride; between 5% and 15% of ytterbium(III) fluoride; a maximum of 5% of thulium(III) fluoride; and a maximum of 5% of europium(III) fluoride. All these percentages are referred to the total weight of the luminescent additive.

Silica is used as cold light coating, i.e., it does not involve heat production, being particularly useful in the main physical phenomena that allow the production of light with characteristics such as phosphorescence and fluorescence. Furthermore, it is used as an insulating coating, forming a thin layer on the application surface similar to a laminate, protecting and preserving a surface from the action of water, from scratches or other abrasion damage. Alumina acts as a selective adsorbent allowing the level of fluoride in the mixture to be adjusted downward.

Calcium fluoride significantly increases its fluorescence with broad emission that appears within the range of acceptable targets. The optically active compounds of the additive are formed by luminescent "rare earth" ions. Ytterbium fluoride increases the absorption of infrared light and subsequent conversion to visible light by means of the remaining luminescent elements in the marker composition (erbium, thulium and europium fluorides). Erbium-doped silica glass fibres are the active element to amplify the luminescent effect, in addition, its homogenisation increases due to the presence of alumina. Ytterbium fluoride also increases the amplification of the material as a luminescent marker and thulium (III) fluoride is used to improve up-conversion fluorescence from infrared to ultraviolet and visible in fluorinated glasses. Europium fluorescence is used to improve the emitted colour encoding effect of the marker additive.

The luminescent additive that acts as an identification marker of the biocide composition is applied between 0.1% and 5% by weight of the treated material during the tanning process.

This luminescent additive, only visible under IR excitation, is formulated to be integrated into the formulations of the treated materials and act as a marker, when irradiated by IR light, in the range of 900 to 990 nanometres.

The different tests have determined that the luminescent additive of the product presents emission only under invisible infrared light with a high intensity brightness, due to the lack of background noise due to the zero autofluorescence of the textile substrate or the surface where it has been applied. Additionally, the luminescence intensity ratios between the different visible emission bands (blue, green and red) observed after the conversion of the invisible infrared reading light, can be tuned on demand (by modifying the concentration level and type of dopant "rare earth" ions). In other words, encoding the emitted light using an unforgeable code, by being designed and synthesised on demand at source, providing a novel and disruptive proof of concept for light encryption security patterns.

The tests applied on the samples in the tanning process are:
ASTM E2149-20: Standard test method for the determination of the activity of immobilised antimicrobial agents under dynamic contact conditions.
- UNE-EN ISO 18184- Test methods for the determination of the antiviral activity of products against specific viruses.

A biocide surface protection of between 12 and 18 months has been determined, so it allows keeping hard, non-porous surfaces protected for a long time with a single application. The product is effective for biocide protection against various microorganisms such as *Escherichia coli, Staphylococcus aureus, Enterococcus hirae, Pseudomonas aeruginosa, Candida albicans,* as well as certain types of viruses with and without an external envelope.

As an added value, the luminescent feature thereof clearly distinguishes the present invention with respect to the state of the art, since it allows the user to visualise where the product has been applied and recognise an encoded light pattern to demonstrate that the product is authentic. A simple and compact portable handheld device (pocket spectrometer / App for a smartphone camera) will allow the end user to detect the encoded luminescent pattern by illuminating with a low-cost commercial infrared laser pointer, and therefore to verify that the applied product is protected with the original biocide composition. This luminescence technology with infrared light and colour encoding using "rare earth" ions is at the forefront of anti-counterfeiting light technology, along the lines of techniques used in the authentication of documents (passports, security inks) and in security encryption for legal tender banknotes. Therefore, its use in the original identification of the biocide product constitutes without a doubt an absolute novelty that defines a clear substantial difference with other products having similar features on the market. The biocide product is formulated in an aqueous base, so good drying times are obtained, ranging from 2 to 3 minutes. This product is easy to apply. Using a nebuliser, it allows effective application on the surface with the help of a cloth.

## Claims

1. An antimicrobial protection in the post-tanning process for leather by incorporating a biocide composition and a luminescent additive, which is **characterised in that** in the leather post-tanning step, a biocide composition is incorporated in an amount between 0.1 % and 5% of the weight of the material to be tanned and which comprises: between 3% and 5% of silver phosphate glass; between 1% and 3.5% of silicone; between 0.1% and 0.30% of aliphatic hydrocarbons; between 90% and 95% of water, and a luminescent additive that is added in an amount between 0.1% and 5% of the weight of the material to be tanned and comprises between 20% and 40% silica; alumina in a proportion between 10% and 30%; between 30% and 50% of calcium fluoride; between 0.5% and 3% of erbium(III) fluoride; between 5% and 15% of ytterbium(III) fluoride; a maximum of 5% of thulium(III) fluoride; and a maximum of 5% of europium(III) fluoride, with respect to the total weight of the luminescent additive.

2. The antimicrobial protection in the post-tanning process for leather by incorporating a biocide composition and a luminescent additive that allows its identification and authentication, according to claim 1 which is **characterised in that** the luminescent additive acts as a marker, when irradiated by IR light, in the range of 900 to 990 nanometres.
